(19) Europäisches Patentamt
European Patent Office
Office européen des brevets

(11) **EP 2 693 620 A2**

(12) **EUROPEAN PATENT APPLICATION**

(43) Date of publication:
**05.02.2014 Bulletin 2014/06**

(51) Int Cl.:
*H02M 1/42* (2007.01)     *H02M 3/156* (2006.01)
*H02M 3/158* (2006.01)     *H05B 41/282* (2006.01)

(21) Application number: **13275178.5**

(22) Date of filing: **31.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **03.08.2012 KR 20120085171
29.07.2013 KR 20130089659**

(71) Applicant: **Samsung Electro-Mechanics Co., Ltd.
Gyunggi-do (KR)**

(72) Inventors:
• **Han, Sang Kyoo
Seoul (KR)**

• **Choi, Yoon
Seoul (KR)**
• **Hwang, Min Ha
Seoul (KR)**
• **Park, Hong Sun
Gyunggi-do (KR)**
• **Ryu, Byoung Woo
Gyunggi-do (KR)**
• **Kim, Sung Cheol
Gyunggi-do (KR)**
• **Oh, Dong Seong
Gyunggi-do (KR)**

(74) Representative: **Potter Clarkson LLP
The Belgrave Centre
Talbot Street
Nottingham, NG1 5GG (GB)**

(54) **Single stage forward-flyback converter and power supply apparatus**

(57)     There are provided a single stage forward-flyback converter, and a power supply apparatus capable of increasing power factor correction and power conversion efficiency. The single stage forward-flyback converter includes: a forward converter unit including a transformer having a primary winding receiving input power and a first secondary winding magnetically coupled to the primary winding to receive power induced thereto, and converting the power in a forward scheme; and a flyback converter unit sharing the transformer, including a second secondary winding, and converting the power in a flyback scheme, wherein the forward converter unit is selectively operated according to a voltage level of the input power.

FIG. 1

Printed by Jouve, 75001 PARIS (FR)

## Description

## CROSS-REFERENCE TO RELATED APPLICATIONS

This application claims the priorities of Korean Patent Application Nos. 10-2012-0085171 filed on August 3, 2012, and 10-2013-0089659 filed on July 29, 2013, in the Korean Intellectual Property Office, the disclosures of which are incorporated herein by reference.

## BACKGROUND OF THE INVENTION

### Field of the Invention

The present invention relates to a single stage forward-flyback converter, and a power supply apparatus.

### Description of the Related Art

Generally, in order to drive an electronic device domestically, commercially or industrially, a power supply apparatus converting commercially available power into driving power appropriate for the electronic device and supplying the converted driving power thereto, is used inside or outside the electronic device.

The power supply apparatus may also be used in order to drive a light emitting diode.

Recently, interest in and demand for a light emitting diode (LED) has increased.

A device using a light emitting diode may be manufactured to be compact to thereby be used in a situation in which it is difficult to install an existing electronic product. Further, in the case in which a light emitting diode is used as an illumination apparatus, it is easy to implement various colors of light and control illuminance levels, such that a light emitting diode may be used as a system illumination apparatus appropriate for devices used in situations such as watching movies, reading, conferencing, or the like.

In addition, a light emitting diode consumes approximately 1/8 of the power consumed by an incandescent lamp, has a lifespan of fifty thousand to one hundred thousand hours, 5 to 10 times longer than that of an incandescent lamp, and is an environmentally-friendly, mercury free light source and may be variously implemented.

Due to these characteristics, light emitting diode illumination projects have been implemented as government-supported projects in many nations, such as America, Japan, Australia, and others, as well as Korea.

As described above, a light emitting diode, the use of which has increased, requires a driving apparatus for the driving thereof. However, as described in the following Related Art Document, in the case in which a two-stage configuration is applied to a power factor correction circuit stage performing power factor correction and a direct current (DC) to DC converter circuit stage for constant current control of an output load, power conversion efficiency may be deteriorated, and in the case of driving a plurality of light emitting diode arrays, when a required light emitting diode driving voltage rises, manufacturing costs may be increased due to the use of a high voltage element.

[Related Art Document]

Korean Patent Laid-open Publication No. 2012-0031215

## SUMMARY OF THE INVENTION

An aspect of the present invention provides a single stage forward-flyback converter, and a power supply apparatus capable of increasing power factor correction and power conversion efficiency while performing a power factor correction function and a constant current control in a single circuit stage.

According to an aspect of the present invention, there is provided a single stage forward-flyback converter including: a forward converter unit including a transformer having a primary winding receiving input power and a first secondary winding magnetically coupled to the primary winding to receive power induced thereto, and converting the power in a forward scheme; and a flyback converter unit sharing the transformer with the forward converter unit, including a second secondary winding provided in the transformer and magnetically coupled to the primary winding, and converting the power in a flyback scheme, wherein the forward converter unit is selectively operated according to a voltage level of the input power.

The forward converter unit may perform a power conversion operation in a case in which the voltage level of the input power is higher than that of output power of the single stage forward-flyback converter.

The flyback converter unit may perform the power conversion operation regardless of the voltage level of the input power.

The forward converter unit and the flyback converter unit may share a power switch switching the power input to the primary winding of the transformer.

The power switch may continually maintain a turn-on duty to improve a power factor of the input power.

The input power may be rectified and then transferred to the primary winding.

Winding start points of the primary winding and the first secondary winding may be formed in the same position as each other.

Winding start points of the primary winding and the second secondary winding may be formed in positions opposing each other.

Outputs of the forward converter unit and the flyback converter unit may be supplied to at least one light emitting diode.

According to another aspect of the present invention, there is provided a power supply apparatus including: a rectifying unit rectifying alternating current (AC) power; a forward converter unit including a transformer having a primary winding receiving the rectified power from the rectifying unit and a first secondary winding magnetically coupled to the primary winding to receive power induced thereto, and converting the power in a forward scheme; and a flyback converter unit sharing the transformer with the forward converter unit, including a second secondary winding provided in the transformer and magnetically coupled to the primary winding, and converting the power in a flyback scheme, wherein the forward converter unit is selectively operated according to a voltage level of the rectified power.

The forward converter unit may perform a power conversion operation in a case in which the voltage level of the rectified power is higher than that of power induced from output power of the power supply apparatus to the primary winding of the transformer.

The flyback converter unit may perform the power conversion operation regardless of the voltage level of the AC power.

The power supply apparatus may further include an electromagnetic interference (EMI) filter removing EMI of the AC power.

**BRIEF DESCRIPTION OF THE DRAWINGS**

The above and other aspects, features and other advantages of the present invention will be more clearly understood from the following detailed description taken in conjunction with the accompanying drawings, in which:

FIG. 1 is a schematic circuit diagram of a power supply apparatus according to an embodiment of the present invention;
FIG. 2 is a graph illustrating a criterion for a power conversion operation of a power supply apparatus according to an embodiment of the present invention;
FIGS. 3 and 5 are graphs showing operating waveforms of a power supply apparatus according to an embodiment of the present invention;
FIGS. 4A through 4C are views showing a flow of a current in the case illustrated in FIG. 3;
FIGS. 6A and 6B are views showing a flow of a current in the case illustrated in FIG. 5; and
FIGS. 7A and 7B are graphs showing operating waveforms according to a voltage level of input power.

**DETAILED DESCRIPTION OF THE EMBODIMENTS**

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art.

In the drawings, the shapes and dimensions of elements may be exaggerated for clarity, and the same reference numerals will be used throughout to designate the same or like elements.

A case in which any one part is connected to the other part includes a case in which the parts are directly connected to each other and a case in which the parts are indirectly connected to each other with other elements interposed therebetween.

In addition, unless explicitly described otherwise, "comprising" any components will be understood to imply the inclusion of other components but not the exclusion of any other components.

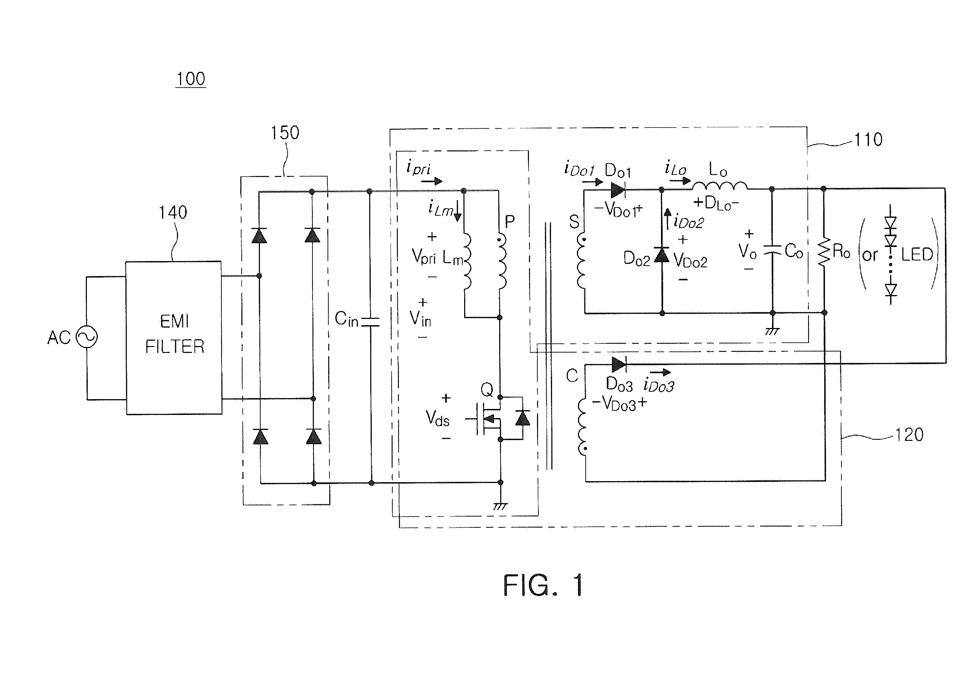

FIG. 1 is a schematic circuit diagram of a power supply apparatus according to an embodiment of the present invention.

Referring to FIG. 1, the power supply apparatus 100 according to the embodiment of the present invention may include a forward converter unit 110 and a flyback converter unit 120. In addition, the power supply apparatus 100 according to the embodiment of the present invention may further include a controlling unit 130, an electromagnetic interference (EMI) filter 140, and a rectifying unit 150.

The forward converter unit 110 and the flyback converter unit 120 may share a primary winding P of the transformer and a power switch Q with each other.

The forward converter unit 110 may include a transformer having the primary winding P and a first secondary winding S and the power switch Q switching power input to the primary winding P. The primary winding P and the first secondary winding S may be magnetically coupled to each other so as to have a preset turns ratio, the power input to the primary winding P may induce power to the first secondary winding S according to the switching of the power switch Q, and a voltage level of the power induced to the first secondary winding S may be determined according to the turns ratio.

Since the forward converter unit 110 performs a power conversion operation in a forward scheme, winding start points of the primary winding P and the first secondary winding S may be formed in the same position as each other.

The flyback converter unit 120 may share the transformer and the power switch Q with the forward converter unit 110, and the transformer may have a second secondary winding C. The second secondary winding C may be magnetically coupled to the primary winding P to have a preset turns ratio, the power input to the primary winding P may induce power to the second secondary winding C according to the switching of the power switch Q, and a voltage level of the power induced to the second secondary winding C may be determined according to the turns ratio.

Since the flyback converter unit 120 performs a power conversion operation in a flyback scheme, winding start points of the primary winding P and the second secondary winding C may be formed in positions opposing each other.

Output power of the forward converter unit 110 and the flyback converter unit 120 may be transferred to a load Ro, particularly, at least one light emitting diode (LED) to allow the LED to perform a light emitting operation. A plurality of LEDs may be connected in series with each other to configure a single LED array. Although not illustrated, a plurality of LED arrays may be connected to each other in parallel and receive the output power to perform a light emitting operation.

The EMI filter 140 may filter electromagnetic interference (EMI) from input AC power, and the rectifying unit 150 may rectify the filtered power and transfer the rectified filtered power to the primary winding P of the transformer.

The forward converter unit 110 may selectively perform a power conversion operation according to a voltage level of the input power. More specifically, the forward converter unit 110 may perform the power conversion operation in the case in which the voltage level of the input power is higher than that of the output power.

Meanwhile, the flyback converter unit 120 may perform a power conversion operation regardless of the voltage level of the input power.

In addition, the forward converter unit 110 and the flyback converter unit 120 may share the power switch Q, wherein the power switch Q may continually maintain a turn-on duty to improve a power factor of the input power.

That is, the forward converter unit 110 and the flyback converter unit 120 may perform power factor improvement and power conversion operations in a single power conversion circuit.

Hereinafter, selective power conversion operations of the forward converter unit 110 and the flyback converter unit 120 according to a comparison between voltage levels of the input power and the output power will be described in detail.

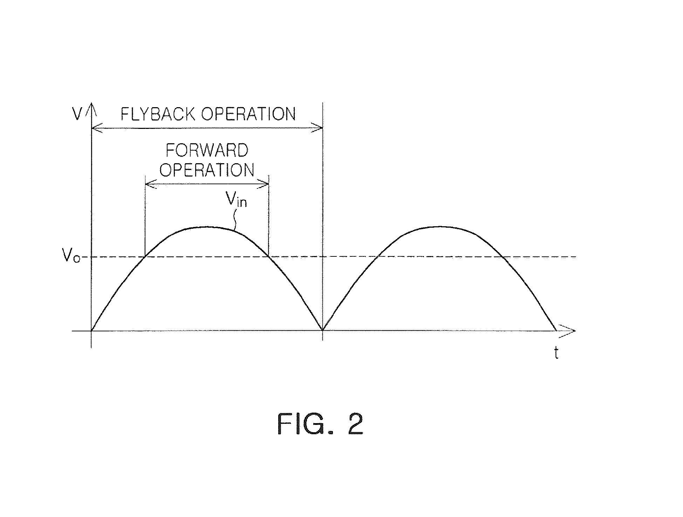

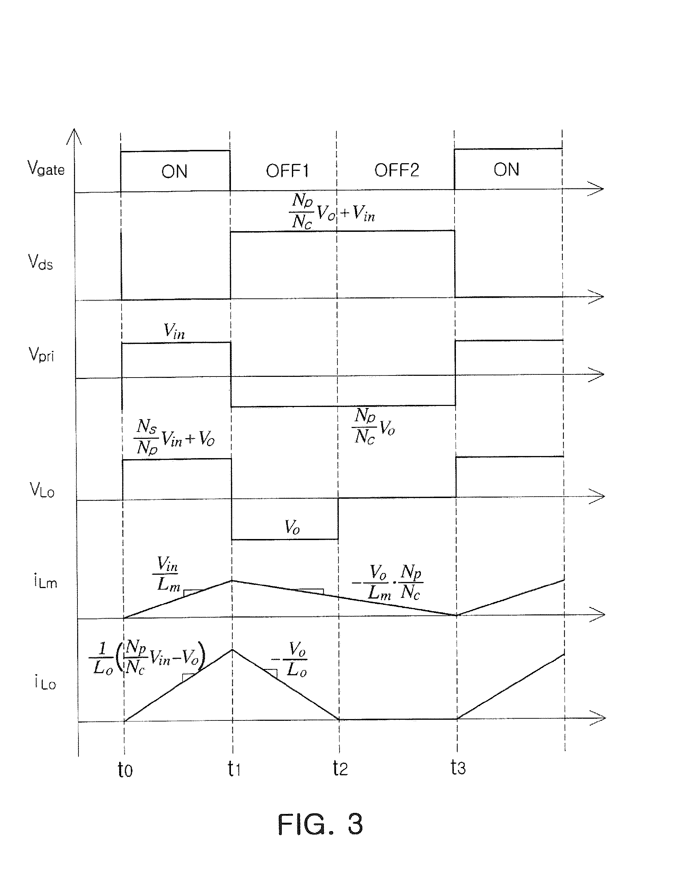

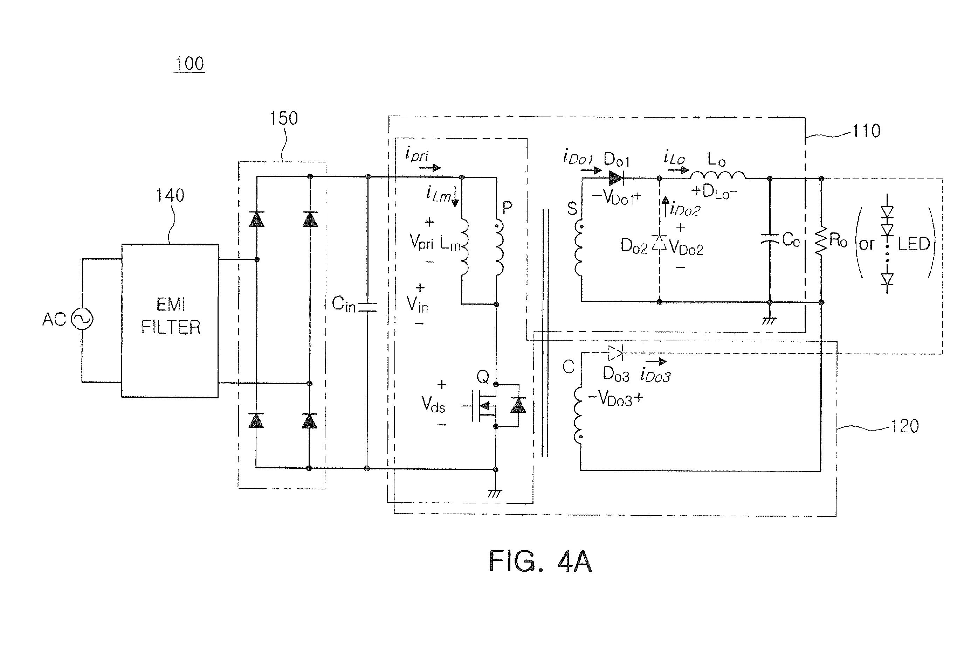

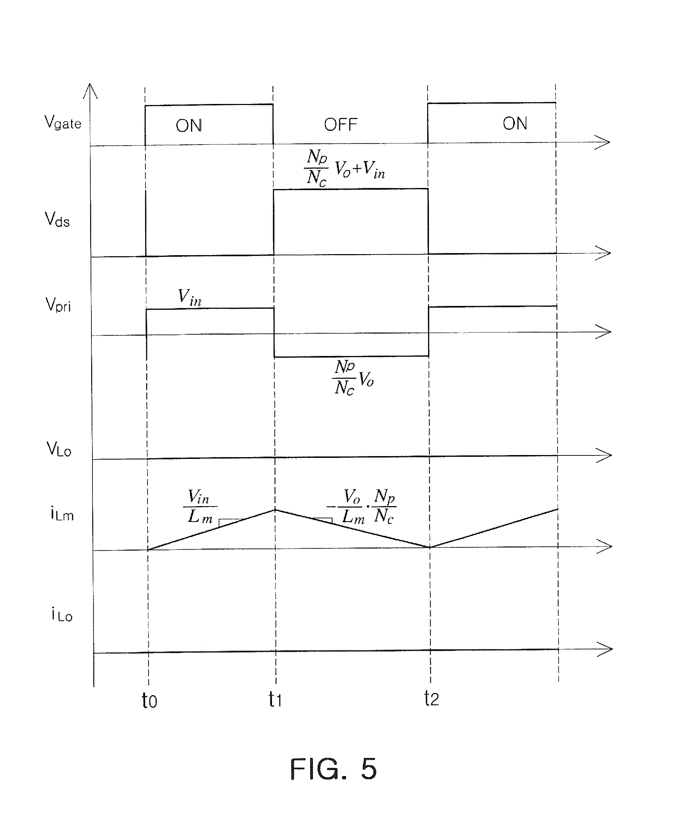

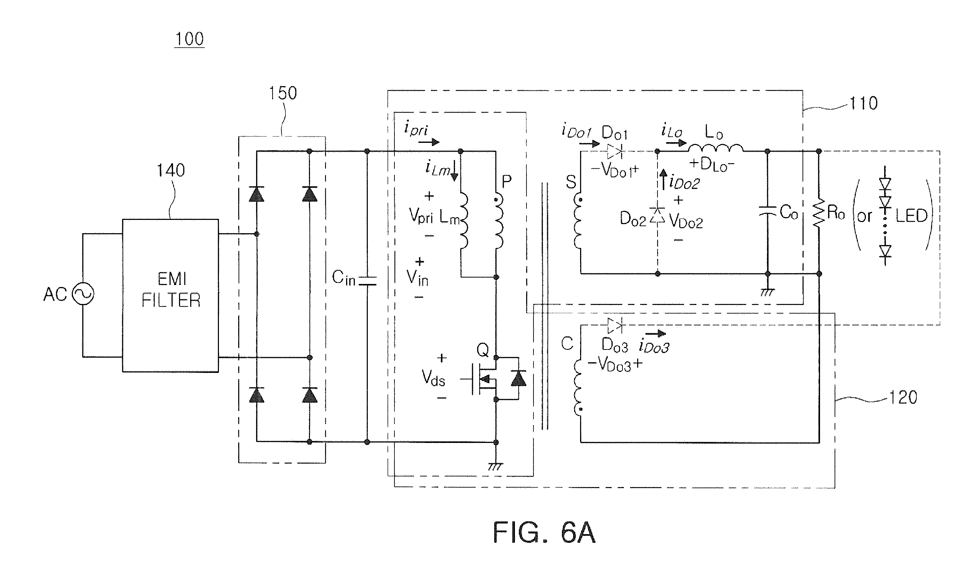

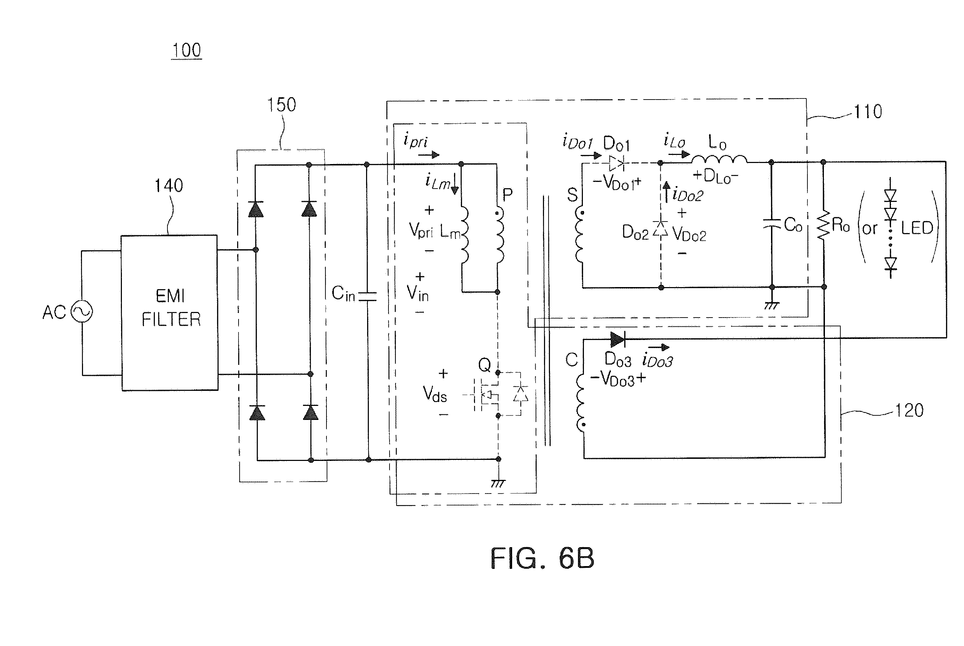

FIG. 2 is a graph illustrating a criterion for a power conversion operation of a power supply apparatus according to an embodiment of the present invention. FIGS. 3 and 5 are graphs showing operating waveforms of a power supply apparatus according to an embodiment of the present invention. FIGS. 4A through 4C are views showing a flow of a current in the case illustrated in FIG. 3. FIGS. 6A and 6B are views showing a flow of a current in the case illustrated in FIG. 5.

With reference to FIG. 2, as described above, the forward converter unit 110 may selectively perform the power conversion operation according to a comparison result between the voltage levels of input power Vin and output power Vo. In the case in which the voltage level of the input power is higher than that of the output power, the forward converter unit 110 may perform the power conversion operation, and in the case in which the voltage level of the input power is lower than that of the output power, the forward converter unit 110 may stop the power conversion operation.

In the case in which the voltage level of the input power is higher than that of the output power, the forward converter unit 110 may perform the power conversion operation. Referring to FIGS. 3 and FIGS. 4A to 4C, at the time of turn-off of the power switch Q, an input voltage Vin is larger than voltage VOR induced to the primary side of the transformer. In addition, in a turn-off section of the power switch Q, a current of the primary side of the transformer is reset toward the output voltage through the second secondary winding C.

Further, as the input voltage is increased, an operational range of this section is increased, such that a current peak value of a current iLm of a magnetizing inductor Lm is decreased, thereby decreasing overall core loss. When the power switch Q is turned off, an inductor-capacitor (L-C) Lo and Co structure of an output terminal of the forward converter unit may also be used as an output filter, such that an output voltage ripple in the turn-off section of the power switch Q may be decreased.

Modes 1 to 3 set each time, as illustrated in the graph of FIG. 3, will be described in detail.

Mode 1 (t0~t1): In this section, the power switch Q is turned on, and a conduction path as illustrated in a solid line of FIG. 3A is formed. In this section, the forward converter unit 110 performs the power conversion operation. Therefore, in this section, an output diode Do1 is conducted, and stored energy of a circuit is transferred to an output load through a transformer and an output inductor Lo. In addition, a certain amount of energy is stored in the magnetizing inductor Lm. Here, a current flowing in the magnetizing inductor Lm is increased at a gradient of Vin/Lm. A current flowing in the output diode Do1 is the same as a current flowing in the output inductor Lo. In this section, since the current flowing in the output inductor Lo is not present, an initial current value of the output inductor Lo is '0'. The current flowing in the output inductor Lo may be represented by the following Equation 1.

$$(\text{Equation } 1)$$

$$i_{Lo}(t) = \frac{1}{L_o}\left(\frac{N_s}{N_p}V_{in} - V_o\right)t$$

Output diodes Do2 and Do3 are not conducted, such that a current does not flow in the output diodes Do2 and Do3. At this time, voltages applied to the diodes become Ns*Vin/Np and Nc*Vin/Np+Vo, respectively.

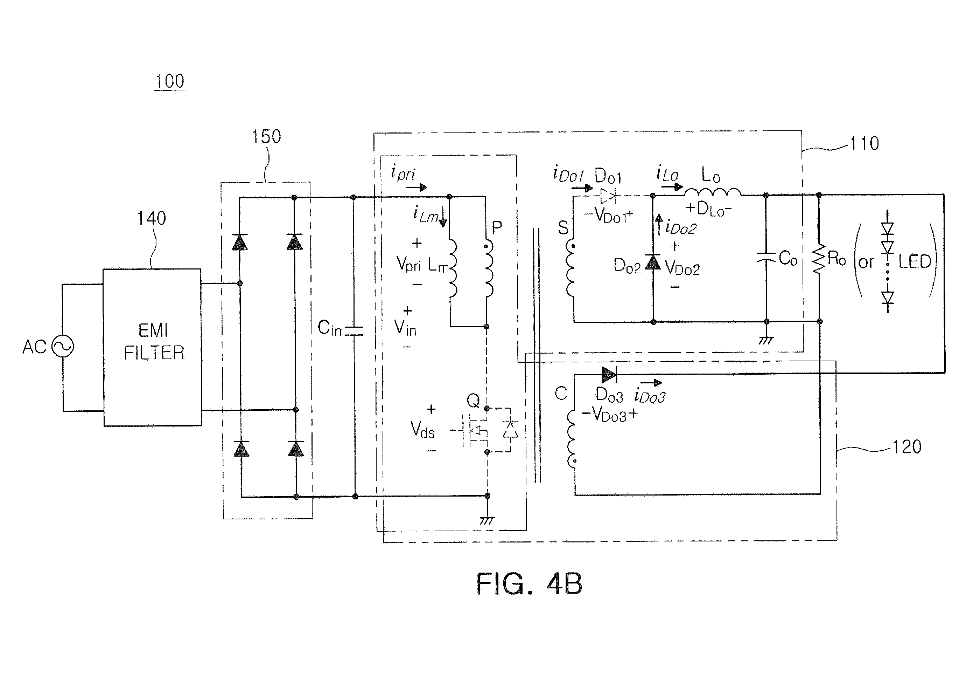

Mode 2 (t1~t2): In this section, the power switch Q starts to be turned off, and a conduction path as illustrated in a solid line of FIG. 4B is formed. The current iLm that has flowed in the magnetizing inductor of the primary side in the previous mode flows in the second secondary winding C for reset, such that the output diode Do3 is conducted. The current flowing in the output diode Do3 may be represented by the following Equation 2 and the current flowing in the output diode Do3 flows to a section of Mode 3 in which the current iLm of the magnetizing inductor of the primary side becomes '0'.

(Equation 2)

$$i_{Do3}(t) = -\frac{V_o}{L_m}\left(\frac{N_p}{N_c}\right)^2 t$$

Further, in this section, an output of the forward converter unit 110 is as follows: the output diode Do2 is conducted, such that a current flows through the same path as the output inductor Lo and has a gradient of -Vo/Lo. A voltage applied across the output inductor Lo is the same as the output voltage. In this case, when the current becomes '0', Mode 2 ends.

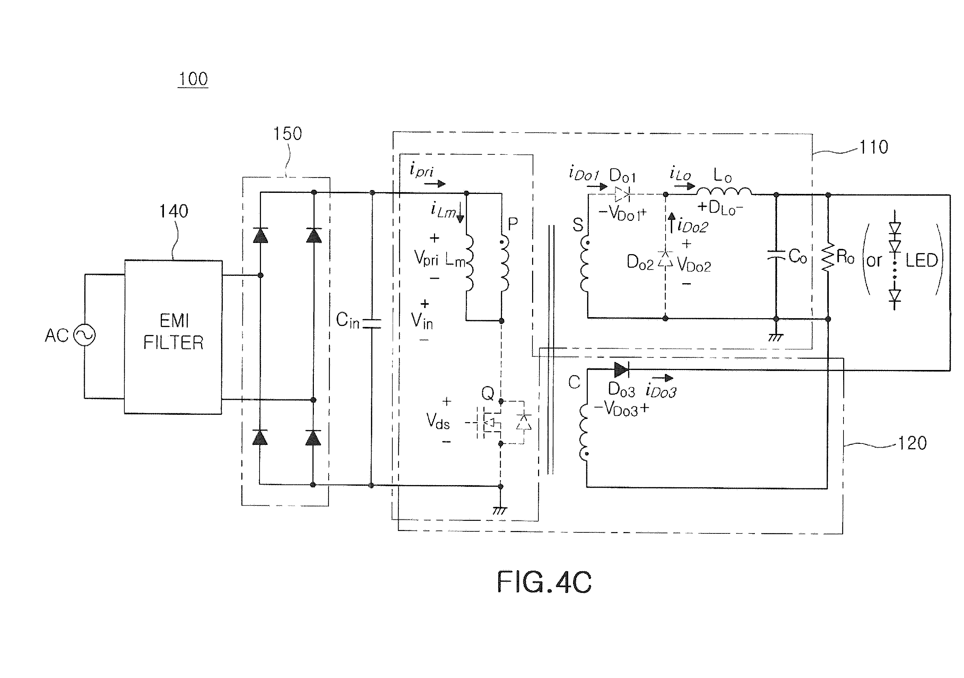

Mode 3 (t2~t3): After the power switch Q is turned off, the current that has flowed in the output diode Do2 and the output inductor Lo of the forward converter unit 110 becomes '0', and a conduction path as illustrated in a solid line of FIG. 4C is formed. The current that has been reset from the previous section flows through the output diode Do3. In this case, when the current iLm of the magnetizing inductor of the primary side becomes '0', the current of the output diode Do3 also becomes '0', such that Mode 3 ends. At this time, the power switch Q is turned on.

In the case in which the voltage level of the input power is lower than that of the output power, only the flyback converter unit 120 may perform the power conversion operation. Referring to FIGS. 5 and FIGS. 6A and 6B, in the case in which the voltage level of the input power is lower than that of the power induced to the primary side of the transformer, only the flyback converter unit 120 may be operated, and the forward converter unit 110 may not be operated.

In the case in which only the flyback converter unit 120 is operated, it may be divided into Modes 1 and 2 corresponding to two sections, which are a turn-on section and a turn-off section of a switch, as illustrated in FIG. 5.

Mode 1 (t0~t1): In this section, the power switch Q is turned on, and a conduction path as illustrated in a solid line of FIG. 6A is formed. In this section, there is no conducted diode, and a current does not flow, even in the output inductor Lo. Voltages applied across the output diodes Do1, Do2, and Do3 are Ns*Vin/Np, Vout, and Nc*Vin/Np+Vout, respectively, that is, Ns*Vin/Np applied to the output diode Do1, Vout applied to the output diode Do2, and Nc*Vin/Np+Vout applied to the output diode Do3. Here, the output diode Do2 always has a voltage stress of Vout, Vout being an output voltage in a section in which Vin<VOR.

Mode 2 (t1~t2): In this section, the power switch Q is turned off, and a conduction path as illustrated in a solid line of FIG. 6B is formed. When the power switch Q is turned off, a voltage stress of Np*Vo/Nc+Vin is applied to the power switch Q. At this time, a voltage of -Np*Vo/Nc is applied to the primary side, and the current iLm flowing in the magnetizing inductor is transferred to a secondary side flyback output through the primary side transformer. Therefore, the output diode Do3 is conducted and the current flowing in the output diode Do3 has the same gradient as that of the above Equation 2.

The output diode Do2 has a voltage stress of Vout as in the turn-on section of the power switch Q, and the output diode Do1 has a voltage stress of (1+Ns/Nc) Vout. When the current flowing in the output diode Do3 of the second secondary winding C becomes 0, the turn-on section of the power switch Q starts.

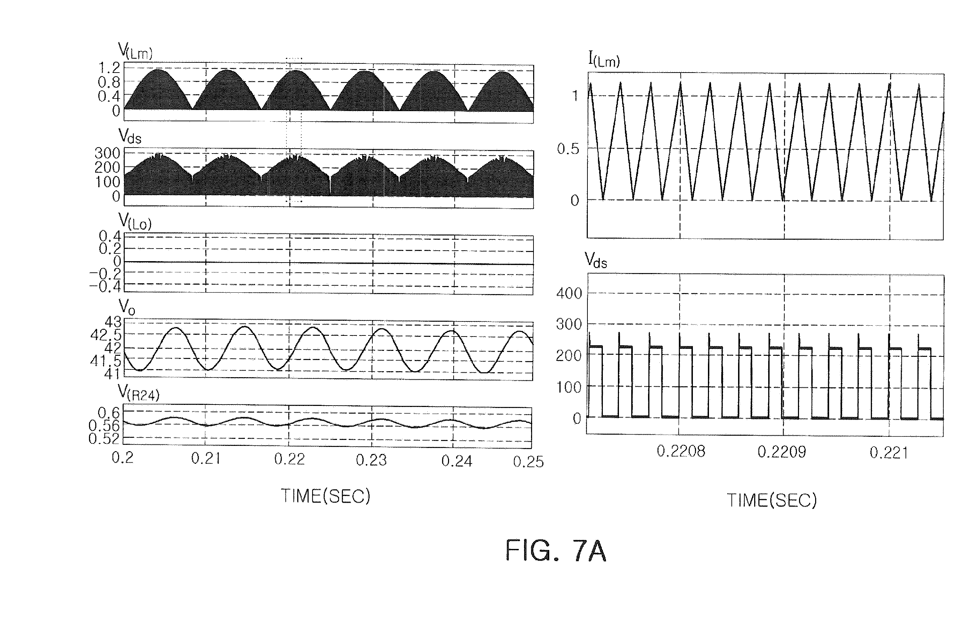

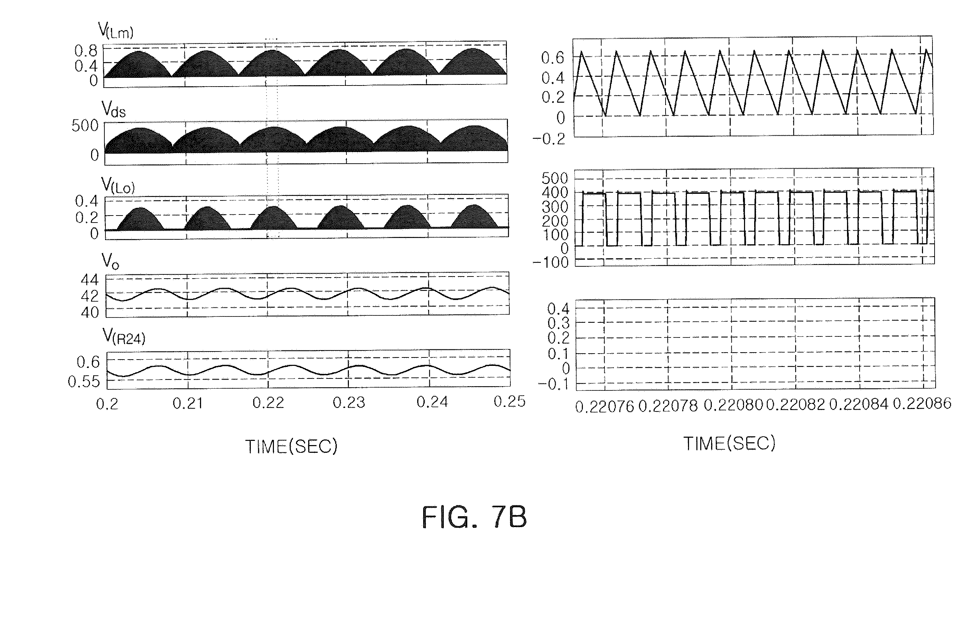

FIGS. 7A and 7B are graphs showing operating waveforms according to a voltage level of input power.

First, main operating waveforms in the case in which the voltage level of the input power Vin is 100Vrms are illustrated in FIG. 6A. It can be confirmed that output specifications are controlled to be appropriate for 42V and 570mA and a boundary conduction mode (BCM) operation is performed. In addition, since a turns ratio between the primary winding P and the first secondary winding S is 3:1, in the case in which the voltage level of the input power Vin is 100Vrms, Vin is always smaller than VOR, such that only the flyback converter unit 120 may be operated, the forward converter unit 110 may not be operated, and the current flowing in the output inductor Lo becomes '0'. That is, in the case in which the voltage level of the input power Vin is 100 Vrms, the power supply apparatus according to the embodiment of the present invention may be operated in the same scheme as that of a flyback converter in a general BCM mode. On the other hand, it could be confirmed that in the case in which the voltage level of the input power Vin is 260 Vrms, the forward converter unit 110 also performs the power conversion operation and the current iLo of the output inductor is operated in a discontinuous conduction mode (DCM), in a section in which Vin>VOR, as illustrated in FIG. 7B.

As set forth above, according to the embodiments of the present invention, the power factor correction function and the constant current control are performed in a single circuit stage, such that the power conversion efficiency is increased and a dead zone of the input power is removed, whereby the power factor may be increased.

That is, the flyback converter performing an existing power factor improving function has a more simple circuit configuration and slightly higher efficiency (a maximum efficiency of about 88%) as compared with an LED driving circuit including a power factor correction circuit and a DC to DC converter. That is, power consumption of a snubber, power consumption of a transformer core, and power consumption of a primary side power switch tend to be illustrated to be slightly large. In the embodiment of the present invention, the current of the magnetizing inductor of the transformer is reset toward the output in order to significantly increase the efficiency by improving the defects described above, such that powering may be obtained in the entire section Ts of one period. Thus, a root mean square (RMS) of the current of the primary side is decreased, such that conduction loss may be decreased. In addition, offset of the current of the magnetizing inductor is relatively small, such that transformer core loss is decreased, whereby high efficiency may be accomplished.

In an existing forward converter, in the case in which the input voltage is lower than the output voltage, since powering to the output side is not obtained, a dead zone of the input current is generated, such that it is difficult to expect a high power factor improvement effect. However, in the embodiment of the present invention, the second secondary winding side is configured in a flyback form, such that it is operated as the flyback converter in the case in which the input voltage is lower than the output voltage, and is operated as the flyback converter and the forward converter in the case in which the input voltage is higher than the output voltage. Therefore, the power factor may be increased without the dead zone of the input current, and the core loss is decreased as compared to the flyback converter according to the related art, such that efficiency may be improved.

While the present invention has been illustrated and described in connection with the embodiments, it will be apparent to those skilled in the art that modifications and variations can be made without departing from the spirit and scope of the invention as defined by the appended claims.

**Claims**

1. A single stage forward-flyback converter comprising:

   a forward converter unit including a transformer having a primary winding receiving input power and a first secondary winding magnetically coupled to the primary winding to receive power induced thereto, and converting the power in a forward scheme; and
   a flyback converter unit sharing the transformer with the forward converter unit, including a second secondary winding provided in the transformer and magnetically coupled to the primary winding, and converting the power in a flyback scheme,
   the forward converter unit being selectively operated according to a voltage level of the input power.

2. The single stage forward-flyback converter of claim 1, wherein the forward converter unit performs a power conversion operation in a case in which the voltage level of the input power is higher than that of output power of the single stage forward-flyback converter.

3. The single stage forward-flyback converter of claim 1, wherein the flyback converter unit performs the power conversion operation regardless of the voltage level of the input power.

4. The single stage forward-flyback converter of claim 1, wherein the forward converter unit and the flyback converter unit share a power switch switching the power input to the primary winding of the transformer.

5. The single stage forward-flyback converter of claim 1, wherein the power switch continually maintains a turn-on duty to improve a power factor of the input power.

6. The single stage forward-flyback converter of claim 1, wherein the input power is rectified and then transferred to the primary winding.

7. The single stage forward-flyback converter of claim 1, wherein winding start points of the primary winding and the first secondary winding are formed in the same position as each other.

8. The single stage forward-flyback converter of claim 1, wherein winding start points of the primary winding and the second secondary winding are formed in positions opposing each other.

9. The single stage forward-flyback converter of claim 1, wherein outputs of the forward converter unit and the flyback converter unit are supplied to at least one light emitting diode.

10. A power supply apparatus comprising:

    a rectifying unit rectifying alternating current (AC) power;
    a forward converter unit including a transformer having a primary winding receiving the rectified power from the rectifying unit and a first secondary winding magnetically coupled to the primary winding to receive power induced thereto, and converting the power in a forward scheme; and
    a flyback converter unit sharing the transformer with the forward converter unit, including a second secondary winding provided in the transformer and magnetically coupled to the primary winding, and converting the power in a flyback scheme,

the forward converter unit being selectively operated according to a voltage level of the rectified power.

**11.** The power supply apparatus of claim 10, wherein the forward converter unit performs a power conversion operation in a case in which the voltage level of the rectified power is higher than that of output power of the power supply apparatus.

**12.** The power supply apparatus of claim 10, wherein the flyback converter unit performs the power conversion operation regardless of the voltage level of the rectified power.

**13.** The power supply apparatus of claim 10, wherein the forward converter unit and the flyback converter unit share a power switch switching the power input to the primary winding of the transformer.

**14.** The power supply apparatus of claim 13, wherein the power switch continually maintains a turn-on duty to improve a power factor of the rectified power.

**15.** The power supply apparatus of claim 10, wherein winding start points of the primary winding and the first secondary winding are formed in the same position as each other.

FIG. 1

FIG. 2

$V_{gate}$

ON | OFF1 | OFF2 | ON

$V_{ds}$

$\frac{N_p}{N_c}V_o + V_{in}$

$V_{pri}$

$V_{in}$

$V_{Lo}$

$\frac{N_s}{N_p}V_{in} + V_o$

$\frac{N_p}{N_c}V_o$

$V_o$

$i_{Lm}$

$\frac{V_{in}}{L_m}$

$-\frac{V_o}{L_m} \cdot \frac{N_p}{N_c}$

$i_{Lo}$

$\frac{1}{L_o}\left(\frac{N_p}{N_c}V_{in} - V_o\right)$

$-\frac{V_o}{L_o}$

$t_0$   $t_1$   $t_2$   $t_3$

FIG. 3

10

FIG. 4A

FIG. 4B

EP 2 693 620 A2

FIG.4C

EP 2 693 620 A2

FIG. 5

FIG. 6A

FIG. 6B

EP 2 693 620 A2

FIG. 7A

FIG. 7B

EP 2 693 620 A2

**EP 2 693 620 A2**

REFERENCES CITED IN THE DESCRIPTION

**Patent documents cited in the description**

- KR 1020120085171
- KR 1020130089659
- KR 20120031215